# FASCICULE DE BREVET EUROPEEN

(11) **EP 4 096 931 B1**
(45) Date de publication et mention de la délivrance du brevet: **21.05.2025**
(21) Numéro de dépôt: 21701538.7
(22) Date de dépôt: 28.01.2021
(51) Int. Cl.: B42D 25/23, B42D 25/305, B42D 25/455, B42D 25/47, G06K 19/073

(54) **ELEMENT DE SECURITE, CARTE ELECTRONIQUE, TERMINAL DE PAIEMENT ELECTRONIQUE ET PROCEDE D'ASSEMBLAGE CORRESPONDANT**
SICHERHEITSELEMENT, ELEKTRONISCHE KARTE, ELEKTRONISCHES ZAHLUNGSENDGERÄT UND ENTSPRECHENDES MONTAGEVERFAHREN
SECURITY ELEMENT, ELECTRONIC CARD, ELECTRONIC PAYMENT TERMINAL AND CORRESPONDING ASSEMBLY METHOD

(30) Priorité: 31.01.2020 FR 2001003
(43) Date de publication de la demande: 07.12.2022
(73) Titulaire: Banks and Acquirers International Holding, 92150 Suresnes (FR)
(72) Inventeur: LAMBERT, Xavier, 92500 Rueil Malmaison (FR); DAJON-LAMARE, Bertrand, 78490 Grosrouvre (FR)
(74) Mandataire: LLR
(86) Numéro de dépôt international: PCT/EP2021/051934
(87) Numéro de publication internationale: WO 2021/151981

(56) Documents cités:
- EP-A1- 2 569 736
- WO-A1-2013/187516
- JP-A- 2006 139 952
- JP-A- 2015 170 492

## Description

### Domaine de l'invention

Le domaine de l'invention est celui des dispositifs électroniques comprenant au moins une carte électronique sur laquelle sont implantés des composants électroniques.

Plus précisément, l'invention concerne la sécurisation et l'amélioration des performances d'une telle carte électronique.

L'utilisation de telles cartes électroniques est très répandue dans l'industrie. Par ailleurs, de nombreux domaines exigent des niveaux de sécurité élevés en termes de confidentialité des signaux électriques transitant dans les équipements. L'invention a ainsi de nombreuses applications, notamment, mais non exclusivement, dans les domaines des terminaux de paiement électronique, les lecteurs de cartes de paiement, etc.

### Art antérieur et ses inconvénients

On s'attache donc plus particulièrement dans la suite de ce document à décrire une problématique existante dans le domaine des terminaux de paiement électronique à laquelle ont été confrontés les inventeurs de la présente demande de brevet, relative aux composants particuliers que sont les dômes de sécurité classiquement utilisés dans les terminaux de paiement électronique.

Ces composants spécifiques sont notamment mis en œuvre dans le but de détecter une intrusion au sein d'un terminal de paiement électronique, dans le cadre plus global d'un système de sécurisation d'un tel dispositif. Ainsi, un dôme de sécurité est positionné à un emplacement stratégique d'une carte électronique dans un terminal de paiement électronique, de manière à fermer un circuit électrique lorsque le boitier du terminal de paiement électronique est fermé, du fait d'une contrainte qui s'applique sur le dôme de sécurité. Ainsi, lorsque le terminal de paiement électronique subit une tentative d'ouverture, ou d'intrusion, le dôme de sécurité se trouve « libéré » de cette contrainte et ouvre le circuit électrique, lequel est relié à un module de détection d'intrusion déclenchant ensuite des actions de sécurisation du terminal de paiement électronique (comme par exemple l'effacement de toutes les données sensibles, la mise en erreur du terminal de paiement électronique ...). Les documents JP 2006 139952 A, JP 2015 170492 A, et WO 2013/187516 A1 décrivent divers exemples d'implémentations de tels dômes de sécurité.

Il existe à ce jour deux techniques principales de pose/d'implantation de ces dômes de sécurité sur une carte électronique : le collage et le brasage (ou soudure).

Selon la première technique, les dômes de sécurité sont collés sur une carte électronique, de façon manuelle, par un opérateur, après la pose et le brasage des autres composants de la carte électronique. De tels dômes de sécurité sont classiquement composés de plusieurs éléments, dont une partie métallique pour assurer la connexion électrique et une ou plusieurs parties adhésives permettant la pose par collage du dôme et la protection de la partie métallique.

Cette technique de pose par collage engendre des difficultés de précision dans le positionnement des dômes de sécurité sur la carte électronique et peut générer ensuite des problèmes lors du fonctionnement du terminal de paiement électronique, par exemple par la détection de fausse intrusion si un ou plusieurs dômes sont mal positionnés sur leur zone de sécurité. En effet, le positionnement d'un dôme de sécurité nécessite non seulement une très grande précision, mais peut également être rendu délicat selon l'emplacement sur la carte électronique. En effet, les composants déjà positionnés (par brasage) sur la carte électronique peuvent soit occulter l'emplacement du dôme soit gêner son positionnement. Enfin, cette technique manuelle présente des inconvénients en termes de rendement de pose, ce rendement étant directement lié à la capacité de l'opérateur à réaliser cette opération. Cette technique de pose par collage peut donc générer des productivités faibles et ainsi augmenter les coûts de fabrication des cartes électroniques sur lesquelles des dômes de sécurité sont implantés.

Selon la deuxième technique, les dômes de sécurité sont soudés sur une carte électronique, de façon automatique.

L'inconvénient principal de cette technique réside dans les problèmes de fiabilité à l'usage, dus au fait que la brasure/soudure est sollicitée continuellement par le stress mécanique, ou la contrainte, que subit le dôme de sécurité. Par ailleurs, le joint brasé n'étant pas reproductible dans sa forme, il est difficile de définir des règles de fiabilité de pose et d'usage selon cette technique.

Il existe donc un besoin pour une technique de pose de dômes de sécurité sur une carte électronique qui permette une fiabilité optimale de pose et une fiabilité optimale à l'usage.

### Exposé de l'invention

La présente technique propose un élément de sécurité comme défini en revendication indépendante 1.

Ainsi, la présente technique propose une solution nouvelle et inventive pour améliorer les performances des dômes de sécurité implantés sur une carte électronique, en permettant leur implantation par collage et de manière automatique lors du procédé d'assemblage utilisé pour assembler des composants dits « CMS », comprenant une étape de brasage par refusion, sur la carte électronique.

Les effets techniques recherchés sont obtenus d'une part grâce à la mise en place automatique de tels dômes de sécurité, permettant d'obtenir une fiabilité et un rendement optimaux en termes d'assemblage, par rapport à une implantation manuelle, et d'autre part grâce au choix des matériaux de fabrication des dômes qui permettent d'utiliser une technique de collage résistant aux températures de refusion et ainsi d'obtenir une grande robustesse dans le temps, par rapport à une technique de soudure.

Pour ce faire, un tel dôme de sécurité comprend notamment une partie métallique permettant d'assurer la fonction de sécurité proprement dite du dôme, ainsi qu'une partie de protection, recouvrant la partie métallique, et permettant le collage du dôme sur la carte électronique, directement ou via une autre partie du dôme, selon différents modes de réalisation. Les matières de fabrication de ces parties métallique et de protection sont donc choisies pour présenter des caractéristiques de résistance aux températures de refusion utilisée lors du procédé d'assemblage. Selon un mode de réalisation, l'élément de sécurité comprend également une première partie, appelée entretoise, présentant :
- une première face comprenant une portion adhésive destinée à être collée sur la carte électronique par un procédé d'assemblage automatique comprenant au moins une étape de refusion,
- une deuxième face sur laquelle est collée la portion adhésive de la première face de la partie de protection,
la première partie étant résistante aux températures utilisées pendant l'étape de refusion.

Ainsi, selon ce mode de réalisation, le dôme de sécurité, constitué d'une partie métallique pour assurer la conductivité électrique, et d'une partie de protection recouvrant la partie métallique, comprend également une partie adhésive (entretoise) permettant d'assurer son collage sur la carte électronique. Cette entretoise présente les mêmes caractéristiques de résistance aux températures que les deux autres parties. Cette entretoise permet également d'obtenir un dôme « pré-assemblé », comprenant les trois parties, pouvant être positionné sur un support afin d'être intégré au procédé d'assemblage automatique.

Le dôme de sécurité selon la présente technique est donc adapté à une implantation par collage pendant un procédé automatique d'assemblage de composants sur une carte électronique comprenant une étape de refusion.

Selon un aspect particulier, la première partie présente une portion centrale évidée et la partie métallique est mobile par rapport à la première partie et la partie de protection.

Ainsi, selon ce mode de réalisation, le dôme de sécurité est constitué d'une entretoise avec une face adhésive destinée au collage sur la carte électronique et une partie centrale évidée permettant à une partie métallique, le dôme proprement dit, d'entrer en contact avec un circuit électrique de la carte électronique, ainsi qu'une troisième partie de protection. Cette troisième partie correspond par exemple à un film plastique présentant lui aussi une face adhésive permettant de le fixer sur l'autre face de l'entretoise et ainsi d'« enfermer » le dôme métallique, libre en mouvement, entre la carte électronique et le film de protection.

Un tel assemblage de ces trois parties du dôme de sécurité permet d'obtenir un élément de sécurité fiable et performant, en termes de précision d'implantation par collage sur la carte électronique et en termes de sécurisation du dispositif électronique dans lequel la carte électronique est installée, la mobilité de la partie métallique permettant notamment une meilleure robustesse d'utilisation. Selon une caractéristique particulière, l'élément de sécurité est composé de matières résistantes en température appartenant au groupe comprenant :
- Les Polyimides ;
- Les Polymères à cristaux-liquides ;
- Les Silicones ;
- Les polyépoxydes
- L'acrylique.

Ainsi, la solution proposée repose sur un choix de matériaux résistants en température, pour chacune des parties composant un dôme de sécurité, permettant de le coller sur une carte électronique lors d'un procédé d'assemblage automatique classique de composants sur la carte électronique, comprenant notamment une étape de brasage par refusion.

La présente technique concerne également une carte électronique comprenant au moins un élément de sécurité tel que décrit précédemment, selon les différents modes de réalisation.

La présente technique concerne également un terminal de paiement électronique comprenant au moins une carte électronique telle que décrite précédemment, selon les différents modes de réalisation.

La présente technique concerne par ailleurs un procédé d'assemblage automatique d'au moins un élément de sécurité tel que décrit précédemment, selon les différents modes de réalisation, sur une carte électronique.

Selon la présente technique, le procédé est défini en revendication indépendante 7.

Ainsi, la présente technique concerne également un procédé d'assemblage d'un ou plusieurs dômes de sécurité sur une carte électronique, de manière automatique et par collage, permettant d'obtenir les effets techniques souhaités en termes de fiabilité, précision et de rendement d'implantation et de robustesse à l'usage.

Pour ce faire, le collage du ou des dômes de sécurité est intégré au procédé de refusion pendant lequel les composant dits « CMS » devant être soudés à la carte électronique sont brasés, ce collage étant possible grâce aux spécificités des matériaux composant le dôme, choisis pour leur résistance aux température utilisées pendant la refusion.

Selon un aspect particulier, le procédé d'assemblage comprend également les deux étapes suivantes, préalables à l'étape de brasage :
- sérigraphie de la carte électronique ;
- mise en place de composants électroniques à braser,
et l'étape d'obtention consiste à prélever par aspiration ledit au moins un dôme de sécurité préalablement positionné sur un support.

Les différents modes de réalisation mentionnés ci-dessus sont combinables entre eux pour la mise en œuvre de la technique proposée.

### Liste des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1a****]** illustre une vue éclatée du dessous d'un dôme de sécurité, selon un mode de réalisation de l'invention ;
**[****Fig 1b****]** illustre une vue éclatée du dessous d'un dôme de sécurité, selon un deuxième mode de réalisation de l'invention ;
**[****Fig 1c****]** illustre une vue éclatée du dessus du dôme de sécurité illustré en figure **Figure 1b****,** selon un deuxième mode de réalisation de l'invention ;
**[****Fig 2****]** illustre un exemple d'emplacement de positionnement d'un dôme de sécurité sur une carte électronique selon mode de réalisation de l'invention ; et
**[****Fig 3****]** illustre les principales étapes d'un procédé d'assemblage automatique d'une carte électronique comprenant le positionnement d'au moins un dôme de sécurité tel qu'illustré en figure **Figure 1a****,** selon un mode de réalisation de l'invention.

### Description détaillée de modes de réalisation de l'invention

Comme indiqué précédemment, les inventeurs de la présente demande de brevet ont cherché à résoudre différents problèmes techniques, liés à différentes méthodes de pose d'éléments de sécurité, ou dômes de sécurité, sur une carte électronique.

Ainsi, la technique de soudure bien connue présente l'inconvénient principal d'une mauvaise robustesse à l'usage, due notamment aux fortes contraintes et mouvements subis par les dômes soudés sur une carte électronique, elle-même intégrée dans un dispositif électronique tel qu'un terminal de paiement électronique par exemple. Ce problème de robustesse n'étant pas, ou peu, constaté avec des dômes collés manuellement sur une carte électronique, les inventeurs ont donc privilégié une technique de mise en place par collage des dômes sur une carte électronique. Cependant, les techniques actuelles de pose par collage de dômes, manuelles, présentent les deux inconvénients principaux de faible précision d'implantation et de faible rendement de pose. Les inventeurs ont donc cherché à intégrer une technique de pose par collage au procédé automatique existant d'assemblage de composants sur une carte électronique utilisant le brasage (par exemple par refusion). Un tel procédé d'assemblage est notamment utilisé pour l'assemblage de composants montés en surface, dits « CMS » (ou en anglais « SMD » pour « Surface Mounted Device »). Pendant un tel procédé d'assemblage CMS, les cartes électroniques passent dans un four, lors d'une étape de refusion, pour braser les composants préalablement positionnés aux endroits prédéterminés sur les cartes électroniques. La refusion est par exemple utilisée pour les cartes électroniques ne comportant que des composants de type CMS, ou ne comportant que des composants de type CMS dont le brasage ne peut se faire que par cette technique, tels que des composants de type « matrice de billes ou BGA (pour « Ball Grid Array » en anglais. La pose de composants CMS sur une carte électronique est privilégiée car elle est rapide, simple et fiable par rapport aux composants dits « traversants » qui nécessitent le perçage de la carte électronique pour leur implantation.

Les inventeurs se sont cependant heurtés à d'autres problèmes liés à l'utilisation d'une technique de pose par collage lors d'un procédé de brasage, à savoir la tenue en température des dômes pendant l'étape de brasage du procédé d'assemblage et le maintien du positionnement du dôme sur son support (par exemple une bobine, un ruban, un film) avant sa mise en place sur la carte électronique. En effet, si les dômes sont décalés sur leur support avant la mise en place, leur positionnement sur la carte électronique risque d'être imprécis, engendrant des problèmes de fiabilité de leur fonction de sécurité.

Afin de pallier ces difficultés, la technique proposée se base sur une modification du dôme de sécurité pour pouvoir intégrer son implantation de façon automatique dans un procédé d'assemblage des autres composants sur la carte électronique. En effet, les machines de pose de composants permettent de placer de façon optimisée, rapide et précise les composants sur les cartes électroniques.

Le principe général de l'invention repose donc sur la modification des matériaux qui composent les dômes de sécurité eux-mêmes, afin qu'ils résistent au profil de température relevé lors de la ou des étapes de brasage et qu'ils puissent ainsi être posés pendant le procédé automatique d'assemblage des composants d'une carte électronique (par exemple un procédé d'assemblage CMS).

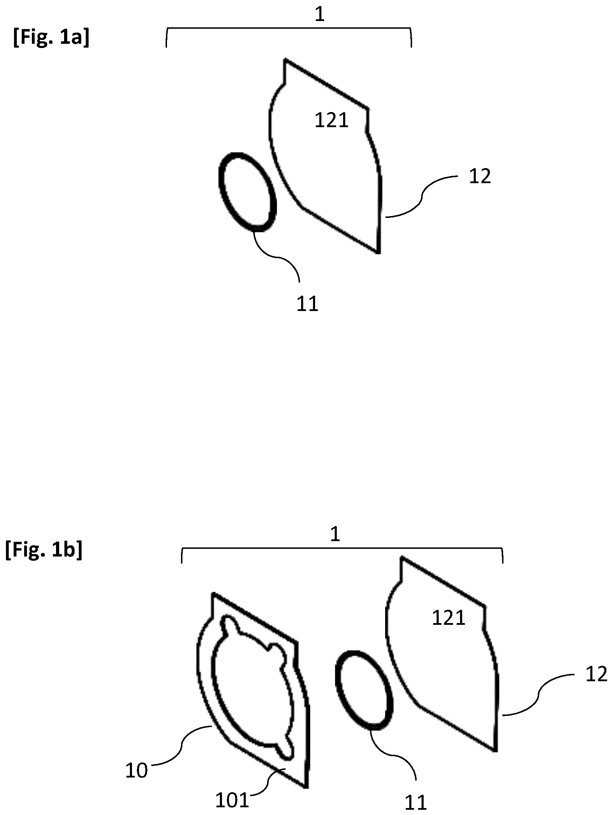

On décrit maintenant un mode de réalisation de la technique proposée, en relation avec les figures **Fig 1a à Fig 3****.**

La figure **Fig 1a** illustre une vue éclatée du dessous d'un exemple de dôme de sécurité 1, selon un premier mode de réalisation, dans lequel le dôme de sécurité 1 comprend une partie métallique 11 destinée à être en contact avec au moins un circuit électrique de la carte électronique (non représentée sur la **Fig 1a**). Le dôme de sécurité 1 comprend également une partie de protection 12 recouvrant la partie métallique 11 et présentant une première face 121 comprenant une portion adhésive destinée à assurer le collage du dôme sur la carte électronique par un procédé d'assemblage automatique comprenant au moins une étape de refusion.

Par exemple, selon ce premier mode de réalisation, la portion adhésive de la première face 121 de la partie de protection 12 est destinée à être collée directement sur la carte électronique, permettant ainsi de coller le dôme de sécurité 1, la partie métallique 11 étant « enfermée » entre la carte et la partie de protection 12.

Selon le deuxième mode de réalisation décrit ci-après, la portion adhésive de la première face 121 de la partie de protection 12 est destinée à être collée sur une autre partie du dôme, appelée entretoise, elle-même collée directement sur la carte électronique

Par ailleurs, selon ce mode de réalisation, les deux parties 11 et 12 sont résistantes aux températures utilisées pendant l'étape de refusion mise en œuvre pour assembler le dôme de sécurité 1 sur une carte électronique. Pour ce faire, les matériaux choisis pour ces parties 11 et 12 doivent être compatibles avec des températures utilisées lors d'une étape de refusion, tout en assurant les fonctions nécessaires à l'usage d'un dôme de sécurité, c'est-à-dire notamment la robustesse mécanique et les dimensions requises pour un tel dôme. En effet, ces éléments de sécurités sont implantés sur des cartes électroniques comprenant un grand nombre de composants et à des endroits stratégiques sur la carte, nécessitant parfois des tailles relativement faibles de ces éléments de sécurités. Ces caractéristiques sont décrites ci-après plus en détails, en relation avec le deuxième mode de réalisation.

La figure **Fig 1b** illustre une vue éclatée du dessous d'un exemple de dôme de sécurité 1. Selon ce deuxième mode de réalisation de l'invention, un tel dôme de sécurité 1 comprend au moins une première partie 10, appelée entretoise, présentant une première face comprenant une portion 101 adhésive destinée à être collée sur la carte électronique (non représentée sur la **Fig 1b**), et une deuxième partie métallique 11 destinée à être en contact avec au moins un circuit électrique de la carte électronique.

Selon ce mode de réalisation, ces deux parties 10 et 11 sont résistantes aux températures utilisées pendant l'étape de refusion mise en œuvre pour assembler le dôme de sécurité 1 sur une carte électronique.

Comme déjà indiqué, les matériaux choisis pour ces première et deuxième parties 10, 11 doivent être compatibles avec des températures utilisées lors d'une étape de refusion, tout en assurant les fonctions nécessaires à l'usage d'un dôme de sécurité, c'est-à-dire notamment la robustesse mécanique et les dimensions requises pour un tel dôme. En effet, ces éléments de sécurités sont implantés sur des cartes électroniques comprenant un grand nombre de composants et à des endroits stratégiques sur la carte, nécessitant parfois des tailles relativement faibles de ces éléments de sécurités.

Par exemple, l'entretoise 10 mesure environ 25 à 100 micromètres d'épaisseur et présente une forme découpée permettant à la partie métallique 11 d'assurer un contact électrique avec un circuit présent sur la carte électronique.

De plus, cette entretoise 10 est fabriquée en une matière résistante en température telle que les Polyimides, les Polymères à cristaux-liquides, ou les Silicones (en film). Pour la face 101, il s'agit par exemple d'une matière adhésive telle que les Polyépoxydes, les Polyimides, ou l'acrylique. Le choix de l'une ou l'autre de ces matières permettant d'obtenir l'effet technique recherché, à savoir la tenue en température, peut être dicté par exemple par des considérations de coûts, d'approvisionnement, de procédé de fabrication.

La partie métallique 11 présente quant à elle une forme sensiblement circulaire, par exemple de diamètre d'environ 3 à 5 millimètres (plus ou moins 0,03 millimètres), avec une épaisseur de 1,18 millimètres (plus ou moins 0,03 millimètres), et environ 30 à 150 gramme-force (soit environ 0,294 à 1,471 newtons).

Selon ce mode de réalisation, le dôme de sécurité 1 comprend également une troisième partie de protection 12, présentant des propriétés de résistance aux températures utilisées pendant l'étape de refusion et recouvrant les première et deuxièmes parties 10, 11. Cette troisième partie de protection 12 se présente par exemple sous la forme d'un film plastique d'environ 25 à 100 micromètres d'épaisseur, avec une face 121 au moins en partie adhésive destinée à être collée sur la première partie 10 (sur la face 102 opposée à la face 101), de manière à former un logement pour la partie métallique 11, tout en la protégeant. Dans ce deuxième mode de réalisation, la troisième partie de protection 12 n'est donc pas directement collée sur la carte électronique, mais est collée sur l'entretoise 10, ce qui permet de former le dôme de manière à ce qu'il puisse être collé ultérieurement sur une carte électronique, comme décrit ci-dessous en relation avec le procédé d'assemblage.

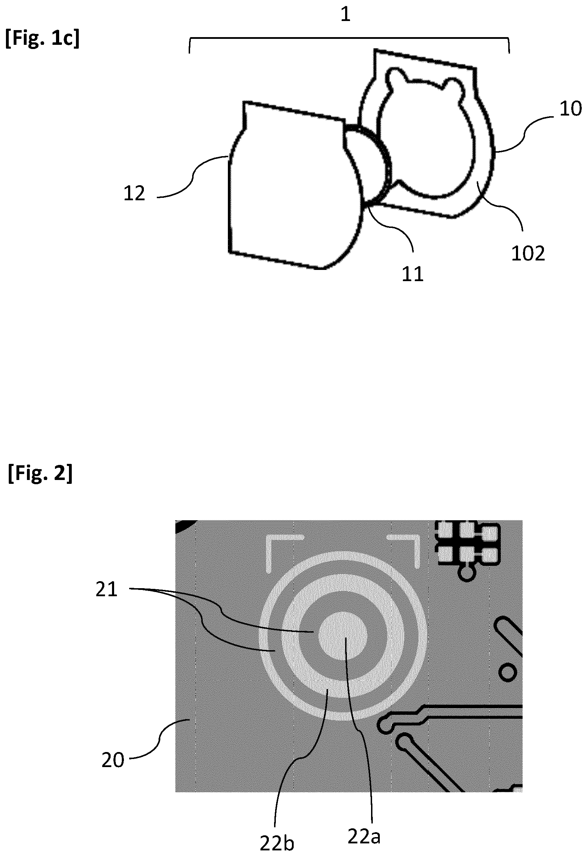

Afin d'obtenir les effets techniques souhaités, à savoir la tenue en température lors d'une ou plusieurs étapes de refusion, cette troisième partie de protection 12 présente des caractéristiques similaires à l'entretoise 10 en ce qu'elle est fabriquée en une matière résistante en température telle que les Polyimides, les Polymères à cristaux-liquides, ou les Silicones (en film). La portion de la face 121 étant fabriquée en une matière adhésive telle que les Polyépoxydes, les Polyimides, ou l'acrylique. Là encore, les mêmes critères de choix pour l'un ou l'autre des matériaux précités, ou un matériau équivalent, résident dans l'optimisation de l'obtention de l'effet technique recherché. La figure **Fig 1c** illustre une vue éclatée du dessus de l'exemple de dôme de sécurité tel que décrit ci-dessus en relation avec la figure **Fig 1b****,** les faces 101 de l'entretoise 10 et 121 de la troisième partie de protection 12 n'étant plus visibles, la face 102 de l'entretoise étant illustrée.

Comme déjà indiqué, la solution proposée repose non seulement sur des éléments de sécurités, ou dômes, présentant des matériaux spécifiques permettant de résister à des températures utilisées lors d'une ou plusieurs étapes de refusion, mais également sur l'intégration de l'implantation par collage de ces dômes dans un procédé automatique d'assemblage de composants sur une carte électronique.

Pour ce faire, il convient dans un premier temps de rappeler le fonctionnement d'un dôme de sécurité : la périphérie de la partie métallique du dôme repose sur une piste conductrice sur la carte électronique, puis, lorsque le dôme est contraint (par exemple lorsque les deux capots d'un boitier de terminal de paiement électronique sont assemblés), la partie centrale de la partie métallique du dôme repose sur une autre piste conductrice fermant ainsi un circuit électrique. De ce fait, lorsque la contrainte ne s'applique plus sur le dôme (par exemple lorsque le terminal de paiement électronique subit une tentative d'ouverture), le circuit électrique s'ouvre. Cette ouverture est détectée puis analysée par exemple comme étant représentative d'une intrusion dans le dispositif dans lequel est intégrée la carte électronique (par exemple un terminal de paiement électronique). La figure **Fig 2** illustre une partie d'une carte électronique 20 avant l'assemblage de composants électroniques, composée par exemple d'une plaque en cuivre recouvrant un substrat 21 (le plus souvent en résine epoxy), cette plaque de cuivre étant elle-même recouverte d'un vernis. La figure **Fig 2** illustre plus particulièrement un emplacement pour l'implantation d'un dôme de sécurité, cet emplacement étant notamment matérialisé par un ensemble de pistes électriques 22a, 22b, permettant le fonctionnement du dôme tel que décrit ci-dessus. Ainsi, il apparaît une piste centrale 22a permettant la fermeture du circuit électrique lorsque le dôme est contraint, grâce également à l'autre piste 22b, sur laquelle la périphérie du dôme (via son entretoise 10 décrite ci-dessus) repose.

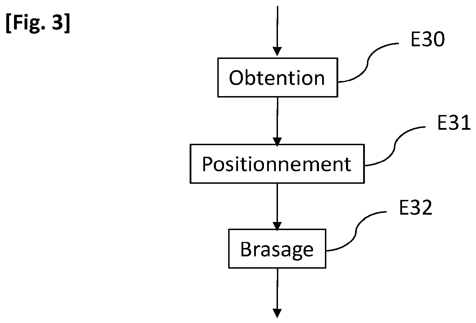

Dans un deuxième temps, il convient de décrire les principales étapes d'un tel procédé automatique d'assemblage, par exemple un procédé CMS, selon un mode de réalisation de la présente technique, en relation avec la figure **Fig 3****.**

La première étape, classique et connue (non illustrée en figure **Fig 2**), d'un tel procédé automatique d'assemblage CMS consiste à sérigraphier la carte électronique avec de la crème à braser, c'est-à-dire à appliquer de la pâte à braser sur des plages prédéterminées, destinées à recevoir ultérieurement des composants à souder. Cette étape de sérigraphie est par exemple mise en œuvre grâce à un pochoir métallique (appelé « clinquant »), permettant de ne recouvrir de pâte à braser que les emplacements des terminaisons des composants.

Une phase de pose automatique de composants électronique est ensuite mise en œuvre, à l'aide d'une machine qui prend les composants et les place aux emplacements prédéterminés (« Pick&Place » en anglais). Classiquement, les composants qui alimentent la machine de pose sont conditionnés en bande et sont prélevés sur cette bande pour être positionnés sur la carte.

Cette phase de pose automatique comprend non seulement l'obtention et la pose de composants électroniques à braser, de type CMS, mais également, lors d'une étape E30, l'obtention d'au moins un élément de sécurité, ou dôme, tel que décrit précédemment.

Dans une application d'assemblage automatique CMS d'une carte électronique dans un terminal de paiement électronique, les dômes sont déposés/collés sur un support (une bobine, un film ou une bande), duquel ils sont prélevés par aspiration par une buse de la machine de pose, lors d'une étape E30. Les dômes prélevés sont ensuite positionnés, par collage (grâce à la face adhésive 101 de leurs entretoises 10), aux emplacements prédéterminés sur la carte électronique, lors d'une étape E31.

A la fin de cette phase de pose automatique, les composants à braser sont donc posés aux emplacements dédiés (préalablement sérigraphiés avec de la pâte à braser) et les dômes de sécurité sont collés aux emplacements dédiés. Le collage des dômes de sécurité est donc totalement automatisé car intégré au procédé automatique d'assemblage de composants électroniques sur une carte électronique.

Ensuite, la carte électronique est passée au four, lors d'au moins une étape E32 de brasage par refusion, pour braser les composants. Durant cette étape E32, la température monte par exemple, selon un profil de température connu, jusqu'à 260°C en pointe pendant une période de 5 à 6 minutes, de manière à ce que la chaleur fasse refondre la pâte déposée lors de l'étape de sérigraphie pour former la brasure sans risque de surchauffe des composants électroniques. C'est ce profil de température que les matières qui constituent le dôme doivent supporter, comme décrit ci-dessus.

Classiquement, une étape de contrôle automatique d'inspection du bon placement des composants est ensuite mise en œuvre, ainsi qu'une étape de test électrique de la carte électronique.

Ainsi, la solution technique proposée permet d'améliorer l'assemblage des dômes de sécurité sur les cartes électroniques et par conséquent la qualité de fabrication des terminaux de paiement électronique comprenant de telles cartes, grâce à un positionnement reproductible sur la carte obtenu par l'automatisation du procédé. De plus, l'automatisation de ce procédé permet également d'obtenir des gains de productivité. Cette solution technique est donc aisément transposable à un ensemble de terminaux de paiement électronique comprenant des cartes électroniques assemblés de cette manière, et facilement industrialisable.

La solution technique d'assemblage proposée augmente donc également la qualité de fabrication des terminaux de paiement tout en améliorant la sécurité. En effet, par ce procédé d'assemblage par collage intégré au procédé automatique CMS, les dômes de sécurité, compatibles avec les températures utilisées lors des tapes de refusion grâce au bon choix des matériaux, sont placés de façon automatique sur des cartes électroniques, optimisant la fiabilité de leur positionnement ainsi que leur fiabilité à l'usage.

## Revendications

1. Élément de sécurité (1), appelé dôme de sécurité, destiné à être collé sur une carte électronique (20), ledit élément de sécurité étant **caractérisé en ce qu'**il comprend au moins :
- une partie métallique (11) destinée à être en contact avec au moins un circuit électrique de ladite carte électronique ;
- une partie de protection (12) recouvrant ladite partie métallique (11) et présentant une première face (121) comprenant une portion adhésive destinée à assurer le collage dudit élément de sécurité (1) sur ladite carte électronique par un procédé d'assemblage automatique comprenant au moins une étape de refusion,
lesdites partie métallique (11) et partie de protection (12) étant résistantes aux températures utilisées pendant ladite étape de refusion.

2. Élément de sécurité (1) selon la revendication 1, **caractérisé en ce qu'**il comprend également une première partie, appelée entretoise (10), présentant :
- une première face (101) comprenant une portion adhésive destinée à être collée sur ladite carte électronique par un procédé d'assemblage automatique comprenant au moins une étape de refusion,
- une deuxième face (102) sur laquelle est collée ladite portion adhésive de ladite première face (121) de ladite partie de protection (12),
ladite première partie (10) étant résistante aux températures utilisées pendant ladite étape de refusion.

3. Élément de sécurité (1) selon l'une quelconque des revendications 1 et 2, **caractérisé en ce que** ladite première partie (10) présente une portion centrale évidée et ladite partie métallique (11) est mobile par rapport à la première partie (10) et la partie de protection (12).

4. Élément de sécurité selon l'une quelconque des revendications 1 à 3, **caractérisé en ce qu'**il est composé de matières résistantes en température appartenant au groupe comprenant :
- Les Polyimides ;
- Les Polymères à cristaux-liquides ;
- Les Silicones ;
- Les polyépoxydes
- L'acrylique.

5. Carte électronique comprenant au moins un élément de sécurité selon l'une quelconque des revendications 1 à 4.

6. Terminal de paiement électronique comprenant au moins une carte électronique selon la revendication 5.

7. Procédé d'assemblage automatique d'au moins un élément de sécurité selon l'une quelconque des revendications 1 à 4, sur une carte électronique, **caractérisé en ce que** ledit procédé comprend les étapes automatiques suivantes :
- obtention (E30) dudit au moins un dôme de sécurité ;
- positionnement (E31) dudit au moins un dôme de sécurité par collage de ladite portion adhésive de ladite première face de ladite première partie ou de ladite portion adhésive de ladite première face de ladite partie de protection sur ladite carte électronique à un emplacement prédéterminé ;
- brasage par refusion (E32) de ladite carte électronique.

8. Procédé d'assemblage automatique selon la revendication 7, **caractérisé en ce qu'**il comprend également les deux étapes suivantes, préalables à ladite étape de brasage :
- sérigraphie de ladite carte électronique ;
- mise en place de composants électroniques à braser,
et **en ce que** ladite étape d'obtention consiste à prélever par aspiration ledit au moins un dôme de sécurité préalablement positionné sur un support.

## Patentansprüche

1. Sicherheitselement (1), genannt Sicherheitsdom, das dazu bestimmt ist, auf eine elektronische Karte (20) geklebt zu werden, wobei das Sicherheitselement **dadurch gekennzeichnet ist, dass** es mindestens aufweist:
- ein Metallteil (11), das dazu bestimmt ist, mit mindestens einem elektrischen Schaltkreis der elektronischen Karte in Kontakt zu kommen;
- ein Schutzteil (12), das das Metallteil (11) bedeckt und eine erste Seite (121) aufweist, die einen Klebeabschnitt aufweist, der dazu bestimmt ist, das Ankleben des Sicherheitselements (1) an die elektronische Karte durch ein automatisches Montageverfahren zu gewährleisten, das mindestens einen Schritt des Wiederaufschmelzens umfasst,
wobei das Metallteil (11) und das Schutzteil (12) gegen die während des Schritts des Wiederaufschmelzens verwendeten Temperaturen beständig sind.

2. Sicherheitselement (1) nach Anspruch 1, **dadurch gekennzeichnet, dass** es auch ein erstes Teil, Abstandshalter (10) genannt, aufweist, das aufweist :
- eine erste Seite (101), die einen Klebeabschnitt aufweist, der dazu bestimmt ist, durch ein automatisches Montageverfahren, das mindestens einen Schritt des Wiederaufschmelzens umfasst, auf die elektronische Karte geklebt zu werden,
- eine zweite Seite (102), auf die der Klebeabschnitt der ersten Seite (121) des Schutzteils (12) aufgeklebt ist,
wobei das erste Teil (10) gegen die während des Schritts des Wiederaufschmelzens verwendeten Temperaturen beständig ist.

3. Sicherheitselement (1) nach einem der Ansprüche 1 oder 2, **dadurch gekennzeichnet, dass** das erste Teil (10) einen ausgehöhlten Mittelabschnitt aufweist und das Metallteil (11) relativ zum ersten Teil (10) und zum Schutzteil (12) beweglich ist.

4. Sicherheitselement nach einem der Ansprüche 1 bis 3, **dadurch gekennzeichnet, dass** es aus temperaturbeständigen Materialien aus der Gruppe besteht, die Folgendes umfasst:
- Polyimide;
- Flüssigkristalline Polymere;
- Silikone;
- Polyepoxide;
- Acryl.

5. Elektronische Karte mit mindestens einem Sicherheitselement nach einem der Ansprüche 1 bis 4.

6. Elektronisches Zahlungsendgerät mit mindestens einer elektronischen Karte nach Anspruch 5.

7. Verfahren zur automatischen Montage von mindestens einem Sicherheitselement nach einem der Ansprüche 1 bis 4 auf einer elektronischen Karte, **dadurch gekennzeichnet, dass** das Verfahren die folgenden automatischen Schritte umfasst:
- Erhalten (E30) des mindestens einen Sicherheitsdoms;
- Positionieren (E31) des mindestens einen Sicherheitsdoms durch Aufkleben des Klebeabschnitts der ersten Seite des ersten Teils oder des Klebeabschnitts der ersten Seite des Schutzteils auf die elektronische Karte an einer vorbestimmten Stelle;
- Wiederaufschmelzlöten (E32) der elektronischen Karte.

8. Verfahren zur automatischen Montage nach Anspruch 7, **dadurch gekennzeichnet, dass** es auch die folgenden zwei Schritte umfasst, die dem Lötschritt vorausgehen:
- Siebdrucken der elektronischen Karte;
- Anordnen der zu lötenden elektronischen Komponenten,
und dass der Schritt des Erhaltens darin besteht, den mindestens einen Sicherheitsdom, der zuvor auf einem Träger positioniert wurde, durch Absaugen zu entnehmen.

## Claims

1. A security element (1), called security dome, for gluing onto an electronic board (20), said security element being **characterised in that** it comprises at least:
- a metal part (11) for contact with at least one electrical circuit of said electronic board;
- a protective part (12) covering said metal part (11) and having a first face (121) comprising an adhesive portion intended to ensure the gluing of said security element (1) on said electronic board by an automatic assembly method comprising at least one reflow step,
said metal part (11) and protective part (12) being resistant to the temperatures used during said reflow step.

2. The security element (1) according to claim 1, **characterised in that** it also comprises a first part, called spacer, having:
- a first face (101) comprising an adhesive portion intended to be glued onto said electronic board by an automatic assembly method comprising at least one reflow step,
- a second face (102) onto which said adhesive portion of said first face (121) of said protective part (12) is glued,
said first part (10) being resistant to the temperatures used during said reflow step.

3. The security element (1) according to any one of claims 1 and 2, **characterised in that** said first part (10) has a hollow central portion and said metal part (11) is movable relative to the first part (10) and the protective part (12).

4. The security element according to any one of claims 1 to 3, **characterised in that** it is composed of temperature-resistant materials belonging to the group comprising:
- Polyimides;
- Liquid-crystal polymers;
- Silicones;
- Polyepoxides;
- Acrylic.

5. An electronic board comprising at least one security element according to any one of claims 1 to 4.

6. An electronic payment terminal comprising at least one electronic board according to claim 5.

7. A method for automatic assembling of at least one security element according to any one of claims 1 to 4 on an electronic board, **characterised in that** said method comprises the following automatic steps:
- Obtaining (E30) said at least one security dome;
- Positioning (E31) said at least one security dome by gluing said adhesive portion of said first face of said first part or said adhesive portion of said first face of said protective part on said electronic board at a predetermined location;
- Reflow soldering (E32) of said electronic board.

8. The method for automatic assembly according to claim 7, **characterised in that** it also comprises the following two steps, prior to said reflow soldering step:
- screen-printing said electronic board;
- placing electronic components to be soldered,
and **in that** said obtaining step consists in removing, by suction, said at least one security dome previously positioned on a support.
